# EUROPEAN PATENT APPLICATION

(11) **EP 3 978 321 A1**
(43) Date of publication of application: **06.04.2022**
(21) Application number: 20818310.3
(22) Date of filing: 12.03.2020
(51) Int. Cl.: B60R 21/017, B60R 21/16

(54) **VEHICLE-MOUNTED NETWORK SYSTEM**

(30) Priority: 06.06.2019 JP 2019106422
(71) Applicant: MAZDA MOTOR CORPORATION, Hiroshima 730-8670 (JP)
(72) Inventor: KUROKAWA Yoshimasa, Aki-gun, Hiroshima 730-8670 (JP); KOSAKA Masanobu, Aki-gun, Hiroshima 730-8670 (JP)
(74) Representative: Herrmann, Uwe
(86) International application number: PCT/JP2020/010724
(87) International publication number: WO 2020/246100

(57) **Abstract**

An airbag system (40) includes: an airbag deployment device (50) for operating an inflator (41); and an airbag controller 140 connected to the airbag deployment device (50) by a communication bus (60) and capable of outputting a control signal to the airbag deployment device (50). The airbag deployment device (50) includes: operation circuits (51, 52) configured to operate the inflator (41); and an operating power source (53) configured to supply power to a squib (42) included in the inflator (41). The operating power source (53) is charged by a current flowing through the communication bus (60).

## Description

### TECHNICAL FIELD

The present disclosure belongs to the technical field related to an on-board network system.

### BACKGROUND ART

Recently, vehicles generally include an airbag system, and on-board network systems mounted on a vehicle include a system that operates an airbag.

For example, Patent Document 1 discloses an airbag system including a first control circuit and a second control circuit. The first control circuit controls currents flowing through a squib. The second control circuit outputs control signals to the first control circuit in response to signals from a built-in acceleration sensor. The first control circuit includes a squib operation detecting means and a power supply holding means. The squib operation detecting means detects a conduction operation to the squib. The power supply holding means secures power supply from the first control circuit to at least the second control circuit, when the squib operation detecting means detects the conduction operation to the squib.

In the airbag system according to Patent Document 1, electric power is supplied to the squib from the battery of the vehicle.

### CITATION LIST

### PATENT DOCUMENT

[Patent Document 1] Japanese Unexamined Patent Application Publication No. 2009-298319

### SUMMARY OF THE INVENTION

### TECHNICAL PROBLEM

Recent vehicles include an increasing number of microcomputers that control body-related devices such as airbags. Each of vehicles of the type requiring a larger number of microcomputers includes hundreds of microcomputers. Including microcomputers for devices for travel of a vehicle and a large number of microcomputers for controlling the body-related devices separately, an on-board network system requires a complicated configuration and involves increasing costs.

An integration of the microcomputers for the devices for travel and the body-related devices in a single arithmetic unit is considered. In order to improve the reliability of airbags, however, a circuit for operating a squib is provided separately in one preferred embodiment to secure a power source. At this time, as in Patent Document 1, if the battery of the vehicle serves as an operating power source of an airbag, a harness for connecting the airbag to the battery is to be prepared separately, requiring a complicated configuration.

The technology disclosed herein was made in view of the problem. It is an objective of the present disclosure to provide a network system of a vehicle including an airbag system and, with a simple configuration, capable of controlling the airbag system.

### SUMMARY OF THE INVENTION

In order to achieve the objective, the technique disclosed herein is directed to an on-board network system of a vehicle including an airbag system. The airbag system includes: an inflator configured to deploy an airbag; an airbag deployment device for operating the inflator; and an airbag control device connected to the airbag deployment device by a communication bus and capable of outputting a control signal to the airbag deployment device. The airbag deployment device includes: an operation circuit configured to operate the inflator; and an operating power source configured to supply operating power to a squib included in the inflator. The operating power source is charged by a current flowing through the communication bus.

With this configuration, the airbag deployment device itself includes the operating power source, without requiring any harness or any other means between the battery of the vehicle and the airbag deployment device. Since the operating power source is charged by the current flowing through the communication bus, the airbag control device and the airbag deployment device need to be connected only by the communication bus. Accordingly, the airbag system can be controlled with the simple configuration.

The integration of the airbag control device and the microcomputers for the devices for travel into the single arithmetic unit also simplifies the configuration of the control device itself of the vehicle.

The on-board network system further includes: a connector configured to connect the squib and the communication bus. The airbag deployment device is integrated in the connector.

With this configuration, the airbag deployment device and the connector are integrated, which further simplifies the configuration related to the airbag system.

In the on-board network system, the operation circuit includes a pair of operation circuits. The airbag deployment device supplies the operating power from the operating power source to the squib when both the pair of operation circuits receive the control signal from the airbag control device.

This configuration improves the reliability for the operation of the squib. Accordingly, the reliability of the airbag system itself improves.

In the on-board network system according to an aspect, the operating power source is charged by the current flowing through the communication bus at a start of the vehicle.

In general, a current flows through a communication bus for operation check at the start of the vehicle. Utilizing the current at this time, the operating power source can be charged efficiently. As a result, the reliability of the airbag system itself further improves.

In the aspect, the airbag deployment device includes a monitor circuit for monitoring the operating power source. The operating power source is further charged by the current flowing through the communication bus when the monitor circuit monitors the operating power source.

At the time of monitoring, the current is input as a signal (e.g., a signal for operation check) through the communication bus to the operating power source. Utilizing the current at this time, the operating power source can be charged more efficiently. As a result, the reliability of the airbag system itself further improves.

The on-board network system further includes: an arithmetic unit configured to calculate a route to be traveled by the vehicle and determine a motion of the vehicle for following the calculated route. The airbag control device is mounted on the arithmetic unit.

### ADVANTAGES OF THE INVENTION

As described above, a network system of a vehicle according to the technology disclosed herein includes an airbag system and is, with a simple configuration, capable of controlling the airbag system.

### BRIEF DESCRIPTION OF THE DRAWINGS

FIG. 1 is a schematic diagram showing a vehicle on which an on-board network system according to an exemplary embodiment is mounted.
FIG. 2 is a schematic diagram showing a configuration of the on-board network system.
FIG. 3 is a block diagram showing a configuration of an airbag control unit.
FIG. 4 is a schematic view showing the relationship between an inflator and a connector.
FIG. 5 is a perspective view of the connector.
FIG. 6 is a block diagram showing a configuration of an airbag deployment device.

### DESCRIPTION OF EMBODIMENT

An exemplary embodiment will now be described in detail with reference to the drawings.

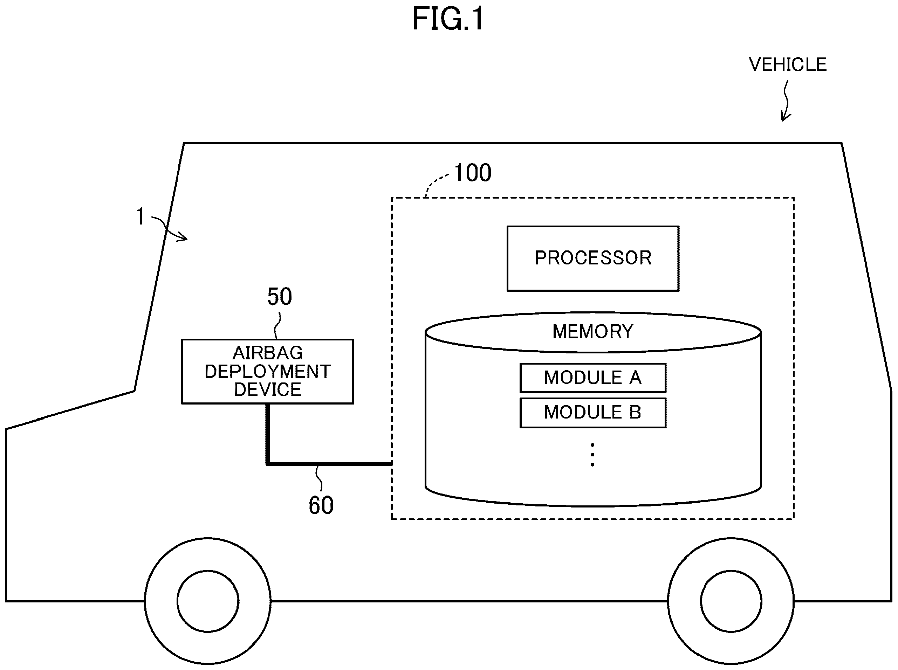

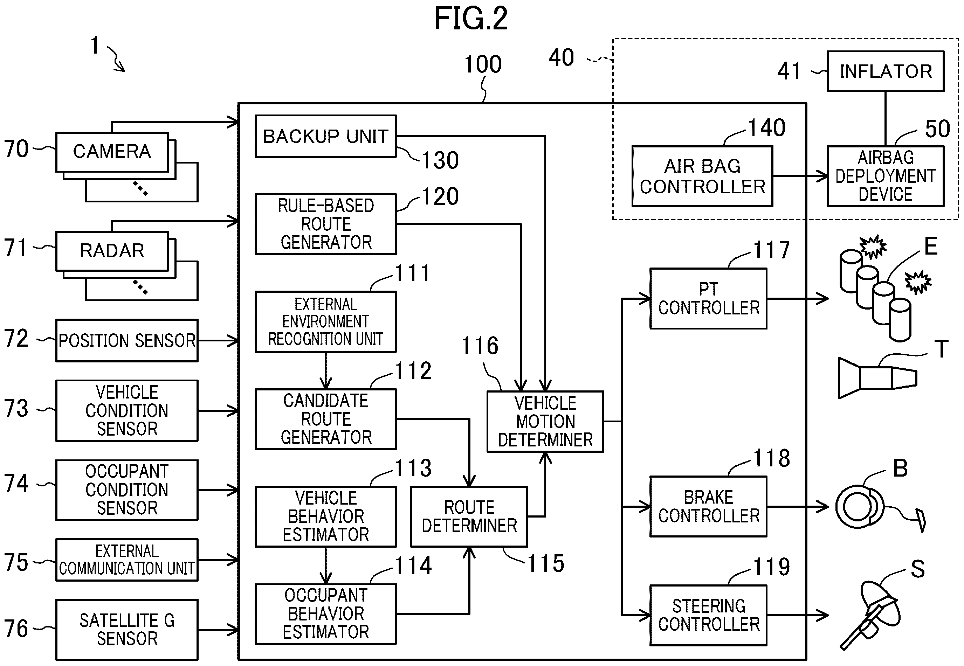

FIG. 1 schematically shows a configuration of a vehicle C on which an on-board network system 1 is mounted. This on-board network system 1 is mounted on a vehicle including an airbag system 40 (see FIG. 2).

The on-board network system 1 includes an arithmetic unit 100. The arithmetic unit 100 is computer hardware specifically including a processor including a CPU, and a memory storing a plurality of modules, for example.

FIG. 2 shows a part of the configuration of the on-board network system 1 including the arithmetic unit 100. The arithmetic unit 100 functions to calculate a route to be traveled by the vehicle and determine the motion of the vehicle for following the route to enable assisted and autonomous driving of the vehicle. Among the configurations of the arithmetic unit 100, those for exhibiting the functions according to this embodiment are described herein. Not all the functions of the arithmetic unit 100 are described.

As shown in FIG. 2, the arithmetic unit 100 determines a target motion of the vehicle based on the information input from a plurality of sensors, for example, and controls the operations of devices. The sensors input vehicle information including information on the external environment outside the vehicle. The sensors, for example, which output the information to the arithmetic unit 100 include a plurality of cameras 70, a plurality of radars 71, a position sensor 72, a vehicle condition sensor 73, an occupant status sensor 74, and an external communication unit 75. The cameras 70 are arranged on the body or other parts of the vehicle and capture images of the environment outside the vehicle. The radars 71 are arranged on the body or other parts of the vehicle and detect objects, for example, outside the vehicle. The position sensor 72 detects the position of the vehicle (i.e., obtains vehicle position information) utilizing a global positioning system (GPS).The vehicle condition sensor 73 includes outputs of sensors such as a vehicle speed sensor, an acceleration sensor, and a yaw rate sensor, for example, detecting the behavior of the vehicle, and obtains the information on the conditions of the vehicle. The occupant status sensor 74 includes in-vehicle cameras, for example, and obtains the information on the conditions of an occupant(s). The external communication unit 75 receives communication information from other vehicles around the host vehicle and traffic information from a navigation system, and inputs the communication information to the arithmetic unit 100. The sensors also include a satellite G sensor 76 that detects instantaneous acceleration of the vehicle. The satellite G sensor 76 is different from a G sensor 141 placed in an airbag controller 140, which will be described later, and is attached to a front side frame, for example.

The cameras 70 are arranged to image the surroundings of the vehicle at 360° in the horizontal direction. Each camera 70 captures optical images showing the environment outside the vehicle to generate image data. Each camera 70 outputs the generated image data to the arithmetic unit 100.

The image data obtained by each camera 70 is input to a human machine interface (HMI) unit (not shown) in addition to the arithmetic unit 100. This HMI unit displays information based on the obtained image data on a display device, for example, inside the vehicle.

Like the cameras 70, the radars 71 are arranged so that the detection range covers 360° of the vehicle in the horizontal direction. The type of the radars 71 is not particularly limited. For example, millimeter wave radars or infrared radars are applicable.

### <Arithmetic Unit>

In assisted or autonomous driving, the arithmetic unit 100 sets a traveling route of the vehicle based on the information input from each of the sensors 70 to 76, and sets the target motion of the vehicle so that the vehicle follows the traveling route. In order to set the target motion of the vehicle, the arithmetic unit 100 includes an external environment identifier 111, a candidate route generator 112, a vehicle behavior estimator 113, an occupant behavior estimator 114, a route determiner 115, and a vehicle motion determiner 116. The external environment identifier 111 recognizes the environment outside the vehicle based on the outputs from the cameras 70, for example. The candidate route generator 112 calculates one or more candidate routes that can be traveled by the vehicle in accordance with the environment outside the vehicle recognized by the external environment identifier 111. The vehicle behavior estimator 113 estimates the behavior of the vehicle based on the outputs from the vehicle condition sensor 73. The occupant behavior estimator 114 estimates the behavior of the occupant(s) of the vehicle based on the outputs from the occupant status sensor 74. The route determiner 115 determines the route to be traveled by the vehicle. The vehicle motion determiner 116 determines the target motion of the vehicle for following the route set by the route determiner 115. The external environment identifier 111, the candidate route generator 112, the vehicle behavior estimator 113, the occupant behavior estimator 114, the route determiner 115, and the vehicle motion determiner 116 are examples of the modules stored in the memory.

The arithmetic unit 100 includes a power train controller (hereinafter referred to as a "PT controller") 117, a brake controller 118, and a steering controller 119 that calculate the control variables of the devices for travel (e.g., the amount of the fuel injected by injectors of an engine E, or the amount of the operation of a brake actuator of a brake system B) for achieving the target motion determined by the vehicle motion determiner 116. The arithmetic unit 100 also includes the airbag controller 140 for controlling the operation of an airbag deployment device 50 which will be described later. Specifically, in this embodiment, the airbag controller 140 is integrated into the single arithmetic unit 100 together with the controller 117 to 119 of the devices for travel. The PT controller 117, the brake controller 118, the steering controller 119, and the airbag controller 140 are examples of the modules stored in the memory.

In addition, the arithmetic unit 100 includes, as safety functions, a rule-based route generation unit 120 and a backup unit 130. The rule-based route generation unit 120 recognizes objects outside the vehicle under a predetermined rule, and generates the traveling route avoiding the objects. The backup unit 130 generates a traveling route for guiding the vehicle 1 to a safety area such as a road shoulder. The rule-based route generation unit 120 and the backup unit 130 are examples of the modules stored in the memory.

The external environment identifier 111 receives the outputs of the cameras 70 and the radars 71, for example, mounted on the vehicle and recognizes the environment outside the vehicle. The environment to be recognized outside the vehicle includes at least roads and obstacles. The external environment identifier 111 estimates here the vehicle environment including the roads and the obstacles by comparing the three-dimensional information around the vehicle with an external environment model based on the data obtained by the cameras 70 and the radars 71. The external environment model is trained by deep learning, for example, and allows recognition of roads, obstacles, and other objects with respect to the three-dimensional information around the vehicle.

For example, the external environment identifier 111 specifies a free space, that is, a region without objects, from images captured by the cameras 70 through image processing. Used in this image processing is the model trained by deep learning, for example. Then, a two-dimensional map representing the free space is generated. In addition, the external environment identifier 111 obtains information on objects around the vehicle 1 from the outputs of the radars 71. This information is positioning information indicating the positions, speeds, and other characteristics of the objects. Then, the external environment identifier 111 combines the generated two-dimensional map and the positioning information on the objects to generate a three-dimensional map representing the surroundings of the vehicle. Here, the information on the installation positions and the imaging directions of the cameras 70 and the information on the locations and the transmission directions of the radars 71 are used. The external environment identifier 111 estimates the vehicle environment including the roads and the obstacles by comparing the generated three-dimensional map with the external environment model. In the deep learning, a multilayer neural network (e.g., a deep neural network (DNN)) is used, for example. An example of the multilayer neural network is a convolutional neural network (CNN).

The candidate route generator 112 generates the candidate routes that can be traveled by the vehicle based on the outputs of the external environment identifier 111, the outputs of the position sensor 72, the information transmitted from the external communication unit 75, for example. For example, the candidate route generator 112 generates the traveling route avoiding the obstacles recognized by the external environment identifier 111 on the road recognized by the external environment identifier 111. The outputs of the external environment identifier 111 include, for example, travel road information related to the road traveled by the vehicle. The travel road information includes information on the shape of the travel road itself and information on objects on the travel road. The information related to the shape of the traveling route includes the shape of the traveling route (e.g., a straight line, a curve, or a curvature), the width of the travel road, the number of lanes, and the width of each lane, for example. The information related to the objects includes the positions and speeds of the objects relative to the host vehicle, the attributes (e.g., the type or the moving directions) of the objects, for example. The types of the objects are other vehicles, pedestrians, roads, and zone lines, for example.

The candidate route generator 112 calculates here a plurality of candidate routes by a state lattice method, and selects one or more of these candidate routes based on the respective route costs for the candidate routes. However, the routes may be calculated by another method.

The candidate route generator 112 sets a virtual grid area on the travel road based on the travel road information. The grid area includes a plurality of grid points. Each grid point identifies the position on the travel road. The candidate route generator 112 sets a predetermined grid point as a destination. The generation unit calculates a plurality of candidate routes through a route search using the plurality of grid points within the grid area. In the state lattice method, a route branches off from a certain grid point into grid points ahead in the travel direction of the vehicle. Thus, each candidate route is set to sequentially pass through the plurality of grid points. Each candidate route includes time information indicating the time when the candidate route passes through the grid point, speed information related to the speed/acceleration, for example, at the grid point, and other information related to the vehicle motion, for example.

The candidate route generator 112 selects one or more traveling routes from the plurality of candidate routes based on the route costs. The route costs include, for example, the degree of lane centering, the acceleration of the vehicle, the steering angle, and the possibility of a collision. If the candidate route generator 112 selects a plurality of traveling routes, the route determiner 115 selects one of the traveling routes.

The vehicle behavior estimator 113 measures the conditions of the vehicle from the outputs of the sensors, such as the vehicle speed sensor, the acceleration sensor, and the yaw rate sensor, detecting the behavior of the vehicle such as the wheel torque. The vehicle behavior estimator 113 uses a 6DoF model of the vehicle indicating the behavior of the vehicle.

Here, the 6DoF model of the vehicle is obtained by modeling acceleration along three axes, namely, in the "forward/backward (surge)", "left/right (sway)", and "up/down (heave)" directions of the traveling vehicle, and the angular velocity along the three axes, namely, "pitch", "roll", and "yaw". That is, the 6DoF model of the vehicle is a numerical model not grasping the vehicle motion only on the plane (the forward/backward and left/right directions (i.e., the movement along the X-Y plane) and the yawing (along the Z-axis)) according to the classical vehicle motion engineering but reproducing the behavior of the vehicle using six axes in total. The six axes further include the pitching (along the Y-axis), rolling (along the X-axis) and the movement along the Z-axis (i.e., the up/down motion) of the vehicle body mounted on the four wheels with the suspension interposed therebetween.

The vehicle behavior estimator 113 applies the 6DoF model of the vehicle to the traveling route generated by the candidate route generator 112 to estimate the behavior of the vehicle when following the traveling route.

The occupant behavior estimator 114 particularly estimates the driver's health condition and emotion from the results of the detection of the occupant status sensor 74. Examples of the health conditions include good health condition, a low fatigue level, poor health condition, and lowering of consciousness. Examples of the emotions include fun, normal, bored, annoyed, and uncomfortable emotions.

For example, the occupant behavior estimator 114 extracts a face image of the driver from the images captured by the cameras placed inside the vehicle cabin, and identifies the driver. The extracted face image and information on the identified driver are provided as inputs to a human model. The human model is trained by deep learning, , for example, and outputs the health conditions and the emotion of each person who may be the driver of the vehicle, from the face image. The occupant behavior estimator 114 outputs the health conditions and the emotions of the driver output by the human model.

In addition, if a bio-information sensor, such as a skin temperature sensor, a heartbeat sensor, a blood flow sensor, and a perspiration sensor, is employed as the occupant status sensor 74 for obtaining information on the driver, the occupant behavior estimator 114 measures the bio-information on the driver from the outputs from the bio-information sensor. In this case, the human model uses the bio-information as inputs, and outputs the health conditions and the emotions of people who may be the driver of the vehicle. The occupant behavior estimator 114 outputs the health conditions and the emotions of the driver output by the human model.

In addition, as the human model, a model that estimates an emotion of a human in response to the behavior of the vehicle may be used for each person who may be the driver of the vehicle. In this case, the model may be established by managing, in time sequence, the outputs of the vehicle behavior estimator 113, the bio-information on the driver, and the estimated emotional conditions. With this model, for example, it is possible to estimate the relationship between changes in the driver's emotion (the degree of wakefulness) and the behavior of the vehicle.

The occupant behavior estimator 114 may include a human body model as the human model. The human body model specifies, for example, the weight of the head (e.g., 5 kg) and the strength of the muscles around the neck supporting against G-forces in the front, back, left, and right directions. The human body model outputs a predicted physical condition and subjective viewpoint of the occupant, when a motion (acceleration G-force or jerk) of the vehicle body is input. Examples of the physical condition of the occupant include comfortable/moderate/uncomfortable conditions, and examples of the subjective viewpoint include whether a certain event is unexpected or predictable. For example, a vehicle behavior that causes the head to lean backward even slightly is uncomfortable for an occupant. Thus, a traveling route that causes the head to lean backward can be avoided by referring to the human body model. On the other hand, a vehicle behavior that causes the head of the occupant to lean forward in a bowing manner does not immediately lead to discomfort. This is because the occupant is easily able to resist such a force. Therefore, such a traveling route that causes the head to lean forward may be selected. Alternatively, a target motion can be dynamically determined by referring to the human body model, so that, for example, the head of the occupant does not swing or the head of the occupant stays active.

The occupant behavior estimator 114 applies the human model to the vehicle behavior estimated by the vehicle behavior estimator 113 to estimate a change in the health conditions or the feeling of the current driver with respect to the vehicle behavior.

The route determiner 115 determines the route to be traveled by the vehicle based on the outputs from the occupant behavior estimator 114. If only one route is generated by the candidate route generator 112, the route determiner 115 determines this route as the route to be traveled by the vehicle. If the candidate route generator 112 generates a plurality of routes, a route that an occupant (in particular, the driver) feels most comfortable with, that is, a route that the driver does not perceive as a redundant route, such as a route too cautiously avoiding an obstacle, is selected out of the plurality of candidate routes, in consideration of an output from the occupant behavior estimator 114.

The rule-based route generation unit 120 recognizes objects outside the vehicle under a predetermined rule based on the outputs from the cameras 70 and the radars 71 without using deep learning, and generates a traveling route avoiding such objects. Like the candidate route generator 112, the rule-based route generation unit 120 also calculates a plurality of candidate routes by the state lattice method, and selects one or more of these candidate routes based on the respective route costs for the candidate routes. The rule-based route generation unit 120 calculates the route costs, for example, under the rule not to enter the area within several meters around the objects. This rule-based route generation unit 120 may also employ another technique to calculate the routes.

The information on the route(s) generated by the rule-based route generation unit 120 are input to the vehicle motion determiner 116.

The backup unit 130 generates a traveling route for guiding the vehicle to a safe area, such as a road shoulder, based on outputs from the cameras 70 and the radars 71 at a malfunction of a sensor, for example, or if an occupant is not feeling well. For example, from the information given by the position sensor 72, the backup unit 130 sets a safety area in which the vehicle can be stopped in case of emergency, and generates a traveling route to reach the safety area. Like the candidate route generator 112, the backup unit 130 also calculates a plurality of candidate routes by the state lattice method, and selects one or more candidate routes among these candidate routes based on the respective route costs for the candidate routes. This backup unit 130 may also employ another technique to calculate the routes.

The information on the route(s) generated by the backup unit 130 are input to the vehicle motion determiner 116.

The vehicle motion determiner 116 determines a target motion for the traveling route determined by the route determiner 115. The target motion means steering and acceleration/deceleration for following the traveling route. In addition, with reference to the 6DoF model of the vehicle, the vehicle motion determiner 116 calculates the motion of the vehicle body for the traveling route selected by the route determiner 115.

The vehicle motion determiner 116 determines the target motion for following the traveling route generated by the rule-based route generation unit 120.

The vehicle motion determiner 116 determines the target motion for following the traveling route generated by the backup unit 130.

When the traveling route determined by the route determiner 115 significantly deviates from the traveling route generated by the rule-based route generation unit 120, the vehicle motion determiner 116 selects the traveling route generated by the rule-based route generation unit 120 as the route to be traveled by the vehicle.

At a malfunction of sensors, for example, (in particular, the cameras 70 or the radars 71) or if the occupant is suspected to be not feeling well, the vehicle motion determiner 116 selects the traveling route generated by the backup unit 130 as the route to be traveled by the vehicle.

The device controller includes the PT controller 117, the brake controller 118, and the steering controller 119.

The PT controller 117 calculates the control variables of the engine E and the transmission T, and outputs control signals to the engine E and the transmission T. Specifically, the PT controller 117 sets the amount or timing of fuel injection by injectors of the engine E, the timing of ignition by ignition plugs of the engine E, for example based on the outputs of the vehicle motion determiner 116, and generates control signals for controlling the engine E in accordance with the settings. The PT controller 117 outputs the generated control signals to the injectors, for example, of the engine E. The PT controller 117 sets the gear stages of the transmission T based on the outputs of the vehicle motion determiner 116, and outputs control signals for controlling the transmission T in accordance with the settings. The PT controller 117 outputs the generated control signals to the transmission T. The brake controller 118 sets the operations of the brake actuator of the brake system B based on the outputs of the vehicle motion determiner 116, and generates control signals for controlling the brake actuator in accordance with the settings. The brake controller 118 outputs the generated control signals to the brake system B. The steering controller 119 sets the operations of the electric power steering of the steering system S based on the outputs of the vehicle motion determiner 116, and generates control signals for controlling the electric power steering in accordance with the settings. The steering controller 119 outputs the generated control signals to the steering system S.

### <Airbag System>

The airbag system 40 includes an inflator 41, the airbag deployment device 50, and the airbag controller 140. The inflator 41 deploys an airbag. The airbag deployment device 50 is for operating the inflator 41. The airbag controller 140 is incorporated into the arithmetic unit 100 and outputs control signals to the airbag deployment device 50. The airbag controller 140 and the airbag deployment device 50 are connected by a communication bus 60.

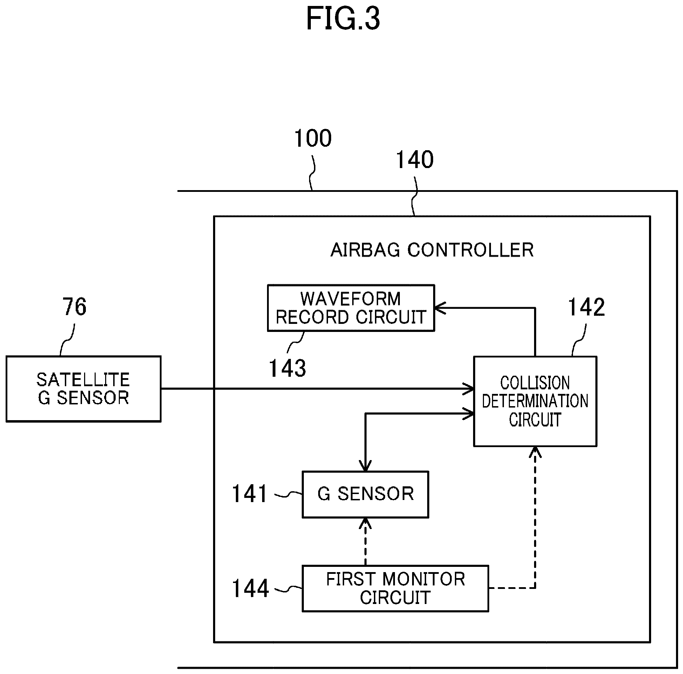

FIG. 3 shows a configuration of the airbag controller 140. The airbag controller 140 includes the G sensor 141, a collision determination circuit 142, a waveform record circuit 143, and a first monitor circuit 144. The G sensor 141 detects the instantaneous acceleration of the vehicle. The collision determination circuit 142 determines whether there is a collision of the vehicle. The waveform record circuit 143 records the results of the detection by the G sensor 141 and the satellite G sensor 76. The first monitor circuit 144 monitors the G sensor 141 and the collision determination circuit 142.

The collision determination circuit 142 receives both the results of detection by the G sensor 141 and the satellite G sensor 76. The collision determination circuit 142 detects a collision of the vehicle based on the results of the detection by these two G sensors 76 and 141. The "collision of the vehicle" here is mainly a collision at the front or a side.

The waveform record circuit 143 records the results of the detection the G sensor 141 and the satellite G sensor 76 when the collision determination circuit 142 determines the occurrence of a collision.

The first monitor circuit 144 monitors the operating states of the G sensor 141 and the collision determination circuit 142. More specifically, the first monitor circuit 144 diagnoses malfunctions of the G sensor 141 and the collision determination circuit 142. For example, the first monitor circuit 144 checks the conduction of the G sensor 141, for example, to check the operating state of the G sensor 141, for example.

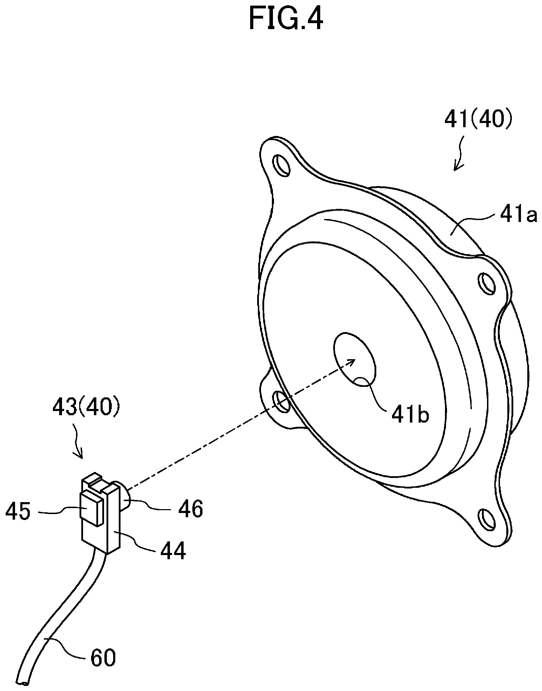

In this embodiment, the airbag deployment device 50 is hardware including a plurality of circuits and a power supply module. The airbag deployment device 50 is integrated in a connector 43. As shown in FIG. 4, connected to the connector 43 is the communication bus 60 to electrically connect the airbag controller 140 and the airbag deployment device 50 together. The airbag deployment device 50 and the inflator 41 are physically and electrically connected via the connector 43.

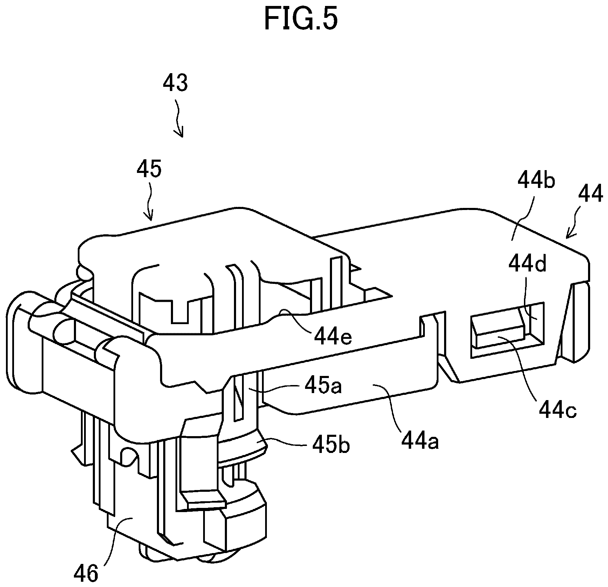

As shown in FIG. 5, the connector 43 includes a body 44, a connection unit 45, and a protrusion 46. The body 44 includes the built-in airbag deployment device 50. The connection unit 45 is physically connected to the inflator 41. The protrusion 46 protrudes into the inflator 41. The body 44 and the protrusion 46 are integrated with each other, while the connection unit 45 is separated from the body 44 and the protrusion 46.

The body 44 includes a housing 44a that houses the airbag deployment device 50, and a lid 44b that covers the housing 44a. The housing 44a includes an engagement part 44c. The engagement part 44c is engaged with an engagement hole 44d of the lid 44b to attach the lid 44b to the housing 44a. The lid 44b has a through hole 44e in which the connection unit 45 is inserted.

The connection unit 45 is slidable with respect to the body 44 in the protruding direction in which the protrusion 46 protrudes. The connection unit 45 includes two legs 45a extending from respective lateral ends in the protruding direction (only one leg 45a is shown in FIG. 5). Each leg 45a includes, at its tip, a claw 45b to be hooked to a lock (not shown) in a case 41a of the inflator 41 so that the connection unit 45 is connected to the inflator 41.

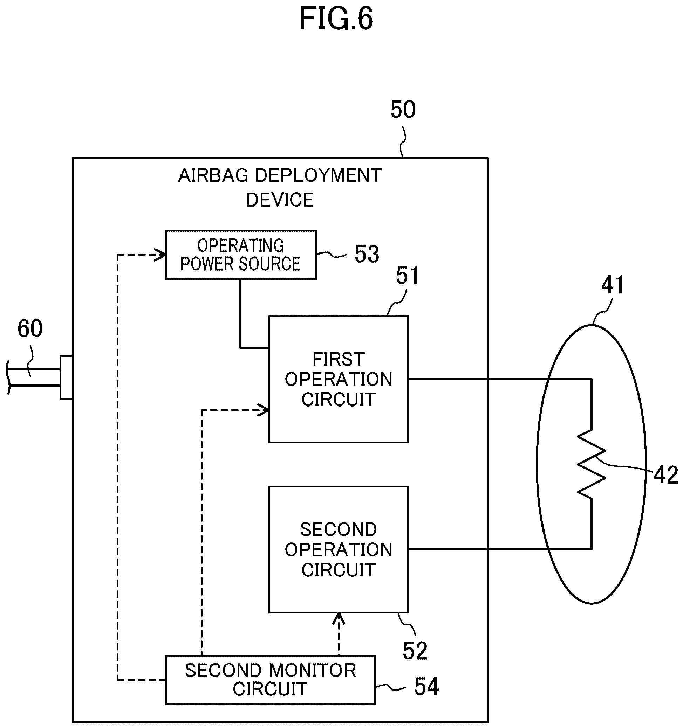

The protrusion 46 protrudes into a hole 41b in the case 41a of the inflator 41. The protrusion 46 has a terminal (not visible in FIG. 5) at its tip. This terminal electrically connects the airbag deployment device 50 to a squib 42 (see FIG. 6) included in the inflator 41.

In order to connect the connector 43 to the inflator 41, first, the protrusion 46 of the connector 43 is inserted into the hole 41b of the inflator 41 to connect the terminal of the protrusion 46 to the terminal of the squib 42 of the inflator 41. Next, the connection unit 45 is slid in the protruding direction. Once the claw 45b of the connection unit 45 is caught by the lock of the case 41a of the inflator 41, the connection unit 45 is connected to the inflator 41. Once the connection unit 45 is connected to the inflator 41, the housing 44a of the body 44 is pressed by the connection unit 45 not to allow the body 44 and the protrusion 46 to come out of the inflator 41. Accordingly, the connector 43 and the inflator 41 are physically connected, whereas the airbag deployment device 50 and the squib 42 are electrically connected.

FIG. 6 shows a configuration of the airbag deployment device 50, specifically, that the airbag deployment device 50 and the squib 42 are electrically connected together. The airbag deployment device 50 includes a pair of operation circuits 51 and 52, an operating power source 53, and a second monitor circuit 54. The operation circuits 51 and 52 are for operating the inflator 41. The operating power source 53 is for supplying operating power to the squib 42. The second monitor circuit 54 is for monitoring the operating states of the two operation circuits 51 and 52 as well as the operating power source 53.

The operation circuits 51 and 52 are namely, a first operation circuit 51 connected to the upstream end of the squib 42 in the current direction and a second operation circuit 52 connected to the downstream end of the squib 42 in the current direction. In this embodiment, the first and second operation circuits 51 and 52 are application specific integrated circuits (ASICs). The first and second operation circuits 51 and 52 operate to supply the operating power from the operating power source 53 to the squib 42 once a control signal is input from the airbag controller 140 to both the circuits. The first and second operation circuits 51 and 52 are electrically connected to the communication bus 60 by wires. Although described in detail later, the first operation circuit 51 functions to charge the operating power source 53.

The operating power source 53 is a device that functions to store power, and may be, for example, a secondary battery such as a nickel hydrogen battery or a lithium ion battery, or a power storage device such as a capacitor. The operating power source 53 stores at least the electric power required for operating the squib 42.

As shown in FIG. 6, the operating power source 53 is electrically connected to the first operation circuit 51 by a wire. The operating power source 53 is charged by the current transmitted from the communication bus 60 via the first operation circuit 51. That is, the operating power source 53 is charged by the current flowing through the communication bus 60. For example, the first operation circuit 51 causes the current flowing through the communication bus 60 for checking the operation at the start of the vehicle (at the on-time of ignition) to flow through the operating power source 53 to charge the operating power source 53. In addition, the first operation circuit 51 causes the current flowing through the communication bus 60 when the second monitor circuit 54 checks the operation of the operating power source 53 to flow through the operating power source 53 to charge the operating power source 53.

The second monitor circuit 54 monitors the operating states of the first and second operation circuits 51 and 52 as well as the operating power source 53, and diagnoses a malfunction of the squib 42 via the first and second operation circuits 51 and 52. The second monitor circuit 54 causes the current flowing through the communication bus 60 to flow through the first and second operation circuits 51 and 52 as well as the operating power source 53 to check the respective operations of the circuits. When diagnosing a malfunction of the squib 42, the second monitor circuit 54 causes a current to flow to the squib 42 at a degree not igniting the squib 42.

When the collision determination circuit 142 of the airbag controller 140 determines that there is a collision of the vehicle, an operation signal is input to the first and second operation circuits 51 and 52 via the communication bus 60. Once the operation signal is input to the first and second operation circuits 51 and 52, the operating power source 53 starts discharging. The discharge from the operating power source 53 causes a current to flow through the route of: the first operation circuit 51, the squib 42, and the second operation circuit 52 to ignite the squib 42. Accordingly, gas is supplied from the inflator 41 to the airbag which is deployed.

Here, as in this embodiment, the controller 117 to 119 of the devices for travel (e.g., the engine E) and the airbag controller 140 integrated into the single arithmetic unit 100 reduce the number of microcomputers to be mounted on the vehicle. The control system of the vehicle has thus a simple configuration. However, if the battery of the vehicle serves as the operating power source of the squib 42 as in a typical case, a harness or any other means is required in addition to the communication bus 60 to connect the battery and the inflator 41 having the squib 42. This results in a complicated configuration.

By contrast, in this embodiment, the operating power source 53 of the squib 42 is incorporated into the airbag deployment device 50, requiring no harness or any other means but only a simple configuration. Since the operating power source 53 is charged by the current flowing through the communication bus 60, the airbag controller 140 and the airbag deployment device 50 need to be connected only by the communication bus 60. Accordingly, the airbag system 40 can be controlled with a simple configuration.

In this embodiment, the connector 43 that connects the squib 42 and the communication bus 60 is further included. The airbag deployment device 50 is integrated in the connector 43. Accordingly, the airbag deployment device 50 and the connector 43 are integral with each other, which further simplifies the configuration of the airbag system 40.

In this embodiment, the operation circuit includes the pair of first and second operation circuits 51 and 52. Once both of the pair of operation circuits 51 and 52 receive a control signal from the airbag controller 140, the airbag deployment device 50 supplies the operating power from the operating power source 53 to the squib 42. Accordingly, the reliability of the operation of the squib 42 improves. As a result, the reliability of the airbag system 40 itself improves.

In this embodiment, the operating power source 53 is charged by the current flowing through the communication bus 60 at the start of the vehicle. As described above, at the start of the vehicle, a current flows through the communication bus 60 for checking the operation. Utilizing the current at this time, the operating power source 53 can be charged efficiently. As a result, the operating power source 53 is kept charged stably and the reliability of the airbag system 40 itself further improves.

In this embodiment, the airbag deployment device 50 includes the second monitor circuit 54 for monitoring the operating power source 53 that is charged by the current flowing through the communication bus 60 when the second monitor circuit 54 monitors the operating power source 53. Accordingly, the operating power source 53 can be charged more efficiently. As a result, the operating power source 53 is kept charged more stably and the reliability of the airbag system 40 itself further improves.

The present disclosure is not limited to the embodiment described above, and may be modified within the scope of the claims.

For example, the information on the environment outside the vehicle recognized by the external environment identifier 111 or the information on the vehicle motion determined by the vehicle motion determiner 116 may be input to the airbag controller 140. In this case, the collision determination circuit 142 determines whether there is a collision of the vehicle in consideration of the information on the environment outside the vehicle and the information on the motion of the vehicle. This increases the accuracy in the determination by the collision determination circuit 142, which further improves the reliability of the airbag system 40.

In particular, if the collision determination circuit 142 can predict a possible collision based on the information on the traveling route of the vehicle, the charging by the operating power source 53 can be prompted. Accordingly, the reliability of the airbag system 40 itself improves.

In the embodiment described above, the single operating power source 53 is provided and connected to the first operation circuit 51. Instead, two operating power sources 53 may be provided and connected to both of the first and second operation circuits 51 and 52. With this configuration, even if one of the operating power sources 53 malfunctions, the power source for operating the squib 42 can be secured, which further improves the reliability of the airbag system 40.

The embodiment described above is merely an example in nature, and the scope of the present disclosure should not be interpreted in a limited manner. The scope of the present disclosure is defined by the appended claims, and all variations and modifications belonging to a range equivalent to the range of the claims are within the scope of the present disclosure.

### INDUSTRIAL APPLICABILITY

The technique disclosed herein is useful as an on-board network system of a vehicle including an airbag system including an inflator that deploys an airbag.

### DESCRIPTION OF REFERENCE CHARACTERS

- 1: On-Board Network System
- 40: Airbag System
- 41: Inflator
- 42: Squib
- 43: Connector
- 50: Airbag Deployment Device
- 51: First Operation Circuit
- 52: Second Operation Circuit
- 53: Operating Power Source
- 54: Second Monitor Circuit
- 60: Communication Bus
- 100: Arithmetic Unit
- 140: Airbag Controller (Airbag Control Device)

## Claims

1. An on-board network system for a vehicle including an airbag system, the on-board network system comprising:
an inflator configured to deploy an airbag;
an airbag deployment device for operating the inflator; and
an airbag control device that is connected to the airbag deployment device by a communication bus and capable of outputting a control signal to the airbag deployment device,
the airbag deployment device including:
an operation circuit configured to operate the inflator; and
an operating power source configured to supply operating power to a squib included in the inflator, wherein
the operating power source is charged by a current flowing through the communication bus.

2. The on-board network system of claim 1, further comprising:
a connector configured to connect the squib and the communication bus, wherein
the airbag deployment device is integrated in the connector.

3. The on-board network system of claim 1 or 2, wherein
the operation circuit includes a pair of operation circuits, and
the airbag deployment device supplies the operating power from the operating power source to the squib when both the pair of operation circuits receive the control signal from the airbag control device.

4. The on-board network system of any one of claims 1 to 3, wherein
the operating power source is charged by the current flowing through the communication bus at a start of the vehicle.

5. The on-board network system of claim 4, wherein
the airbag deployment device includes a monitor circuit configured to monitor the operating power source, and
the operating power source is further charged by the current flowing through the communication bus when the monitor circuit monitors the operating power source.

6. The on-board network system of any one of claims 1 to 5, further comprising:
an arithmetic unit configured to calculate a route to be traveled by the vehicle and determine a motion of the vehicle for following the calculated route, wherein
the airbag control device is mounted on the arithmetic unit.
